# EUROPÄISCHE PATENTSCHRIFT

(11) **EP 4 164 881 B1**
(45) Veröffentlichungstag und Bekanntmachung des Hinweises auf die Patenterteilung: **29.10.2025**
(21) Anmeldenummer: 21731171.1
(22) Anmeldetag: 10.06.2021
(51) Int. Cl.: B32B 17/10, B60J 1/00

(54) **VERBUNDSCHEIBE MIT EINEM HOLOGRAPHISCHEN ELEMENT UND VERFAHREN ZU DEREN HERSTELLUNG**
COMPOSITE PANE WITH HOLOGRAPHIC ELEMENT AND METHOD OF MANUFACTURING THE SAME
VITRE COMPOSITE DOTÉ D'UN ÉLÉMENT HOLOGRAPHIQUE ET SON PROCÉDÉ DE FABRICATION

(30) Priorität: 15.06.2020 EP 20179982
(43) Veröffentlichungstag der Anmeldung: 19.04.2023
(73) Patentinhaber: Saint-Gobain Sekurit France, 60150 Thourotte (FR)
(72) Erfinder: GOMER, Andreas, 50170 Kerpen (DE); KANNENGIESSER, Raphaela, 52064 Aachen (DE); CERIPA, Adrien, 78000 Versailles (FR); KREKEL, Daniel, 52064 Aachen (DE)
(74) Vertreter: Gebauer, Dieter Edmund
(86) Internationale Anmeldenummer: PCT/EP2021/065623
(87) Internationale Veröffentlichungsnummer: WO 2021/254872

(56) Entgegenhaltungen:
- JP-A- H07 315 893
- US-A- 5 066 525

## Beschreibung

Die Erfindung betrifft eine Verbundscheibe mit einem holographischen Element, ein Verfahren zur Herstellung einer solchen Verbundscheibe, sowie die Verwendung einer solchen Verbundscheibe.

Verbundscheiben werden heutzutage an vielen Orten, insbesondere im Fahrzeugbau, verwendet. Dabei umfasst der Begriff Fahrzeug unter anderem Straßenfahrzeuge, Flugzeuge, Schiffe, landwirtschaftliche Maschinen oder auch Arbeitsgeräte. Auch in anderen Bereichen werden Verbundscheiben verwendet. Hierzu zählen beispielsweise Gebäudeverglasungen oder Informationsdisplays, z.B. in Museen oder als Werbedisplays.

In Fahrzeugen werden Verbundscheiben auch als Head-Up-Displays (HUD) zur Anzeige von Informationen verwendet. Ein Head-up-Display ist ein Anzeigesystem, bei dem der Betrachter seine Blickrichtung beibehalten kann, weil die visuellen Informationen in sein Sichtfeld projiziert werden. Dabei wird mittels einer Projektionsvorrichtung ein Bild auf die Verbundglasscheibe projiziert, um dem Betrachter eine Information ins Sichtfeld einzublenden. Im Fahrzeugbereich wird die Projektionseinrichtung z.B. auf dem Armaturenbrett angeordnet, so dass das projizierte Bild auf der nächstliegenden Glasfläche der zum Betrachter hin geneigten Verbundglasscheibe in Richtung des Betrachters reflektiert wird (vgl. z.B. das europäische Patent EP 0 420 228 B1 oder die deutsche Offenlegungsschrift DE 10 2012 211 729 A1).

Für Head-Up-Displays können Reflexionshologramme genutzt werden, die zwischen den Scheiben einer Verbundscheibe einlaminiert sind. Das Reflexionshologramm kann darin aufgezeichnete Informationen enthalten. Das Hologramm kann mittels von einem Projektor abgestrahltem Licht aktiviert werden und somit die in dem Hologramm aufgezeichneten Informationen für den Betrachter wiedergegeben werden. Head-Up-Displays, umfassend holographische optische Elemente sind beispielsweise in den Veröffentlichungen WO 2012/156124 A1 und US 2019/0056596 A1 offenbart.

Bei der Herstellung von laminierten Scheiben mit einem holographischen optischen Element wird in der Regel eine Schicht aus Photopolymeren zwischen zwei Scheiben einlaminiert. Für die Lamination sind üblicherweise zwei Schichten aus thermoplastischen Polymeren, wie Polyvinylbutyral, notwendig, zwischen denen die Photopolymerschicht angeordnet wird. Diese thermoplastischen Polymere enthalten oft Weichmacher oder andere Verbindungen, die in die Photopolymerschicht hineindiffundieren können. Dies kann zu einem Aufquellen oder Schrumpfen der Photopolymerschicht führen, was nachteilige Auswirkungen auf das holographische optische Element hat. Besonders stark ist dieser Effekt, wenn das holographische optische Element bereits vor der Lamination in der Photopolymerschicht enthalten ist. Dies führt dazu, dass das Hologramm nach der Lamination nicht mehr unter denselben Bedingungen sichtbar ist (derselbe Laser und dieselbe Eyebox) wie bei der Erzeugung des holographischen optischen Elements vorgesehen.

US 2019/0101865 A1 beschreibt ein Verfahren zur Herstellung eines laminierten holographischen Displays, bei der eine Photopolymerschicht mithilfe von Polymerschichten zwischen zwei Glasscheiben laminiert wird. Die Belichtung der Photopolymerschicht, wobei das holographische optische Element erzeugt wird, findet hierbei nach dem Laminationsschritt statt, sodass die gesamte Lamination der Verbundscheibe im Dunkeln erfolgen muss. Dies ist technisch schwierig und kostenintensiv.

US 5066525 A beschreibt eine Windschutzscheibe mit einem Hologrammfilm, der zwischen zwei Scheiben einlaminiert ist, wobei eine oder zwei PVB-Schichten zur Verbindung der Scheiben eingesetzt werden können.

JP H07315893 A beschreibt eine Verbundscheibe mit zwei Hologrammfilmen, die durch Laminieren mit mehreren Zwischenschichten zwischen den zwei Einzelscheiben eingelagert werden. Der Aufbau mit zwei Hologrammfilmen ist recht aufwändig, da mehrere Trägerschichten bei der Herstellung benötigt werden.

Der vorliegenden Erfindung liegt die Aufgabe zugrunde, eine verbesserte Verbundscheibe mit einem holographischen optischen Element bereitzustellen, die einfach herzustellen ist und ein einfaches Verfahren zur Herstellung der Verbundscheibe bereitzustellen.

Die Aufgabe der vorliegenden Erfindung wird erfindungsgemäß durch eine Verbundscheibe gemäß Anspruch 1 gelöst. Ein Verfahren zur Herstellung der Verbundscheibe und deren Verwendung gehen aus weiteren unabhängigen Ansprüchen hervor. Bevorzugte Ausführungen gehen aus den Unteransprüchen hervor.

Die Erfindung betrifft eine Verbundscheibe mindestens umfassend eine erste Scheibe, eine erste thermoplastische Zwischenschicht, eine Photopolymerschicht mit einem holographischen optischen Element, eine zweite thermoplastische Zwischenschicht und eine zweite Scheibe. Erfindungsgemäß weist die Verbundscheibe zudem eine Trennschicht auf, die zwischen der Photopolymerschicht und der ersten thermoplastischen Zwischenschicht angeordnet ist. Diese Trennschicht verhindert, dass Weichmacher und andere Bestandteile aus der thermoplastischen Zwischenschicht in die Photopolymerschicht mit dem holographischen optischen Element diffundieren und dort zu einem Aufquellen oder Schrumpfen der Photopolymer führen. Somit ergibt sich ein Schichtstapel mit folgender Reihenfolge: (erste Scheibe) - erste thermoplastische Zwischenschicht - Trennschicht - Photopolymerschicht mit holographischem Element - zweite thermoplastische Zwischenschicht - (zweite Scheibe).

Erfindungsgemäß umfasst der Schichtstapel nur eine einzige Photopolymerschicht. Dies vereinfacht den Aufbau der Scheibe.

Die Photopolymerschicht wird in Verbindung mit einer Trägerschicht eingesetzt, die in der erfindungsgemäßen Verbundscheibe zwischen der zweiten thermoplastischen Zwischenschicht und der Photopolymerschicht angeordnet ist. Diese Trägerschicht ist zum einen als Trägerfolie für eine dünne Photopolymerschicht vorgesehen und kann gleichzeitig als Diffusionsbarriereschicht dienen, die ein Eindringen von Weichmachern und anderen Additiven aus der thermoplastischen Zwischenschicht in die Photopolymerschicht verhindert. Somit ergibt sich ein Schichtstapel mit folgender Reihenfolge: (erste Scheibe) - erste thermoplastische Zwischenschicht - Trennschicht - Photopolymerschicht mit holographischem Element - Trägerschicht - zweite thermoplastische Zwischenschicht - (zweite Scheibe).

Gemäß der Erfindung umfasst die Verbundscheibe mindestens eine erste Scheibe, eine zweite Scheibe, einen dazwischen angeordneten Schichtstapel, bestehend aus den folgenden Schichten in der Reihenfolge von der ersten Scheibe zur zweiten Scheibe: eine erste thermoplastische Zwischenschicht, eine Trennschicht, eine Photopolymerschicht mit mindestens einem holographischen optischen Element, eine Trägerschicht und eine zweite thermoplastische Zwischenschicht. Die Photopolymerschicht hat dabei eine Dicke von 5 µm bis 50 µm. Die Trägerschicht enthält Polyethylenterephthalat (PET), Polyethylen (PE),

Polymethylmethacrylat (PMMA), Polycarbonat (PC), Polyamid (PA), Polyvinylchlorid (PVC) und / oder Cellulosetriacetat (TAC) und hat eine Dicke von 20 µm bis 100 µm. Die Trägerschicht ist direkt angrenzend an die Photopolymerschicht angeordnet. Die Trennschicht enthält Polyethylen (PE), Polyvinylchlorid (PVC) und / oder Polymethylmethacrylat (PMMA) und hat eine Dicke von 10 µm bis 300 µm. Dank der erfindungsgemäßen Kombination von Trägerschichten und Trennschichten ergibt sich nach der Lamination eine stabile Verbundscheibe ohne Beeinträchtigung des holographischen Elements in der Photopolymerschicht, die einfach herstellbar ist.

Bevorzugt liegt die Dicke der Photopolymerschicht zwischen 8 µm und 30 µm, besonders bevorzugt zwischen 10 µm und 20 µm. Diese Dicken sind besonders vorteilhaft für die optische Qualität des holographischen Elements. Zudem ist es vorteilhaft, die Dicke der vergleichsweise teuren Photopolymerschicht zu reduzieren und diese in Kombination mit einer kostengünstigeren Trägerschicht zu verwenden.

Bevorzugt besteht die Trägerschicht im Wesentlichen aus Polyethylenterephthalat (PET), Polyethylen (PE), Polymethylmethacrylat (PMMA), Polycarbonat (PC), Polyamid (PA), Polyvinylchlorid (PVC) oder Cellulosetriacetat (TAC). Besonders bevorzugt besteht die Trägerschicht aus Polyamid (PA).

Bevorzugt hat die Trägerschicht eine Dicke von 40 µm bis 90 µm, besonders bevorzugt von 65 µm bis 80 µm. Diese Dicken sind besonders geeignet, um eine ausreichende Barrierefunktion gegen Weichmacher oder andere Additive aus der thermoplastischen Zwischenschicht zu erfüllen.

Bevorzugt besteht die Trennschicht im Wesentlichen aus Polyethylen (PE), Polyvinylchlorid (PVC) oder Polymethylmethacrylat (PMMA), besonders bevorzugt aus Polymethylmethacrylat (PMMA). Diese Trennschichten wirken als hervorragende Diffusionsbarriere für Weichmacher oder andere Additive aus der ersten thermoplastischen Zwischenschicht.

Bevorzugt hat die Trennschicht eine Dicke von 40 µm bis 200 µm, bevorzugt von 65 µm bis 150 µm.

Erfindungsgemäß besteht der zwischen erster Scheibe und zweiter Scheibe angeordnete Schichtenstapel aus den folgenden Schichten: eine erste thermoplastische Zwischenschicht, eine Trennschicht, Photopolymerschicht mit mindestens einem holographischen Element, eine Trägerschicht und eine zweite thermoplastische Zwischenschicht. Diese Schichten in Kombination liefern eine Verbundscheibe mit einem holographischen Element, das optisch von hoher Qualität ist. Aufgrund der geringen Anzahl an Schichten ist die Verbundscheibe gut herzustellen.

Gemäß einer Ausführungsform, welche in den Patentansprüchen nicht beansprucht ist, umfasst die Verbundscheibe mindestens eine erste Scheibe, eine zweite Scheibe, einen dazwischen angeordneten Schichtstapel, mindestens umfassend die folgenden Schichten in der Reihenfolge von der ersten Scheibe zur zweiten Scheibe: eine erste thermoplastische Zwischenschicht, eine Trennschicht, eine Photopolymerschicht mit mindestens einem holographischen Element, eine Trägerschicht und eine zweite thermoplastische Zwischenschicht. Die Photopolymerschicht hat eine Dicke von 5 µm bis 50 µm. Die Trägerschicht enthält Polyamid (PA), Polycarbonat (PC), Polyethylenterephthalat (PET) und /oder Cellulosetriacetat (TAC) und hat eine Dicke von 20 µm bis 100 µm. Die Trägerschicht ist direkt angrenzend an die Photopolymerschicht angeordnet. Die Trennschicht enthält Polyamid (PA), Polycarbonat (PC), Polyethylenterephthalat (PET) und / oder Cellulosetriacetat (TAC) und hat eine Dicke von 200 µm bis 300 µm oder eine Dicke von 5 µm bis 20 µm. Dank der Kombination von Trägerschichten und Trennschichten ergibt sich nach der Lamination eine stabile Verbundscheibe ohne Beeinträchtigung des holographischen Elements in der Photopolymerschicht, die einfach herstellbar ist.

Bevorzugt liegt die Dicke der Photopolymerschicht zwischen 8 µm und 30 µm, besonders bevorzugt zwischen 10 µm und 20 µm. Diese Dicken sind besonders vorteilhaft für die optische Qualität des holographischen Elements. Zudem ist es vorteilhaft, die Dicke der vergleichsweise teuren Photopolymerschicht zu reduzieren und diese in Kombination mit einer kostengünstigeren Trägerschicht zu verwenden.

Bevorzugt besteht die Trägerschicht im Wesentlichen aus Polyamid (PA), Polycarbonat (PC), Polyethylenterephthalat (PET) oder Cellulosetriacetat (TAC). Besonders bevorzugt enthält die Trägerschicht Polyethylenterephthalat (PET) oder besteht daraus. Diese Materialien verleihen einer dünnen Photopolymerschicht die mechanische Stabilität für eine einfache weitere Verarbeitung und wirken gleichzeitig als Barriere gegen die Diffusion von Weichmachern aus der thermoplastischen Zwischenschicht.

Bevorzugt hat die Trägerschicht eine Dicke von 40 µm bis 90 µm, besonders bevorzugt von 65 µm bis 80 µm. Diese Dicken sind besonders geeignet, um eine effektive Barrierefunktion gegen Weichmacher oder andere Additive aus der thermoplastischen Zwischenschicht zu erfüllen.

Bevorzugt besteht die Trennschicht im Wesentlichen aus Polyamid (PA), Polycarbonat (PC), Polyethylenterephthalat (PET) oder Cellulosetriacetat (TAC). Besonders bevorzugt besteht die Trennschicht aus Polyethylenterephthalat (PET). Diese Trennschichten wirken als hervorragende Diffusionsbarriere für Weichmacher aus der ersten thermoplastischen Zwischenschicht.

Bevorzugt hat die Trennschicht eine Dicke von 220 µm bis 260 µm.

Bevorzugt besteht der zwischen erster Scheibe und zweiter Scheibe angeordnete Schichtenstapel aus den folgenden Schichten: eine erste thermoplastische Zwischenschicht, eine Trennschicht, eine Photopolymerschicht mit mindestens einem holographischen Element, eine Trägerschicht und eine zweite thermoplastische Zwischenschicht. Diese Schichten in Kombination liefern eine Verbundscheibe mit einem holographischen Element, das optisch von hoher Qualität ist. Aufgrund der geringen Anzahl an Schichten ist die Verbundscheibe gut herzustellen.

Gemäß einer Ausführungsform, welche in den Patentansprüchen nicht beansprucht ist, umfasst die Verbundscheibe mindestens eine erste Scheibe, eine zweite Scheibe, einen dazwischen angeordneten Schichtstapel, mindestens umfassend die folgenden Schichten in der Reihenfolge von der ersten Scheibe zur zweiten Scheibe: eine erste thermoplastische Zwischenschicht, eine Trennschicht, eine Photopolymerschicht mit mindestens einem holographischen Element, eine Trägerschicht und eine zweite thermoplastische Zwischenschicht. Die Photopolymerschicht hat dabei eine Dicke von 5 µm bis 50 µm. Die Trägerschicht enthält Polyethylen (PE), Polyvinylchlorid (PVC) und / oder Polymethylmethacrylat (PMMA) und hat eine Dicke von 20 µm bis 100 µm. Die Trägerschicht ist direkt angrenzend an die Photopolymerschicht angeordnet. Die Trennschicht enthält Polyethylenterephthalat (PET), Polyethylen (PE), Polymethylmethacrylat (PMMA), Polycarbonat (PC), Polyamid (PA), Polyvinylchlorid (PVC) und / oder Cellulosetriacetat (TAC) und hat eine Dicke von 10 µm bis 300 µm. Dank der Kombination von Trägerschichten und Trennschichten ergibt sich nach der Lamination eine stabile Verbundscheibe ohne Beeinträchtigung des holographischen Elements in der Photopolymerschicht, die einfach herstellbar ist.

Bevorzugt liegt die Dicke der Photopolymerschicht zwischen 8 µm und 30 µm, besonders bevorzugt zwischen 10 µm und 20 µm. Diese Dicken sind besonders vorteilhaft für die optische Qualität des holographischen Elements. Zudem ist es vorteilhaft, die Dicke der vergleichsweise teuren Photopolymerschicht zu reduzieren und diese in Kombination mit einer kostengünstigeren Trägerschicht zu verwenden.

Bevorzugt besteht die Trägerschicht im Wesentlichen aus Polyethylen (PE), Polyvinylchlorid (PVC) oder Polymethylmethacrylat (PMMA), besonders bevorzugt besteht die Trägerschicht aus Polyethylen (PE). Diese Materialien verleihen einer dünnen Photopolymerschicht die mechanische Stabilität für eine einfache weitere Verarbeitung und wirken gleichzeitig als Barriere gegen die Diffusion von Weichmachern oder anderen Additiven aus der thermoplastischen Zwischenschicht.

Bevorzugt hat die Trägerschicht eine Dicke von 40 µm bis 90 µm, besonders bevorzugt von 65 µm bis 80 µm. Diese Dicken sind besonders geeignet, um eine effektive Barrierefunktion gegen Weichmacher oder andere Additive aus der thermoplastischen Zwischenschicht zu erfüllen.

Bevorzugt besteht die Trennschicht im Wesentlichen aus Polyethylenterephthalat (PET), Polyethylen (PE), Polymethylmethacrylat (PMMA), Polycarbonat (PC), Polyamid (PA), Polyvinylchlorid (PVC) oder Cellulosetriacetat (TAC). Besonders bevorzugt besteht die Trennschicht aus Polymethylmethacrylat (PMMA). Diese Trennschichten wirken als hervorragende Diffusionsbarriere für Weichmacher oder andere Additive aus der ersten thermoplastischen Zwischenschicht.

Bevorzugt hat die Trennschicht eine Dicke von 40 µm bis 200 µm, besonders bevorzugt von 65 µm bis 150 µm.

Bevorzugt besteht der zwischen erster Scheibe und zweiter Scheibe angeordnete Schichtenstapel aus den folgenden Schichten: eine erste thermoplastische Zwischenschicht, eine Trennschicht, eine Photopolymerschicht mit mindestens einem holographischen Element, eine Trägerschicht und eine zweite thermoplastische Zwischenschicht. Diese Schichten in Kombination liefern eine Verbundscheibe mit einem holographischen Element, das optisch von hoher Qualität ist. Aufgrund der geringen Anzahl an Schichten ist die Verbundscheibe gut herzustellen.

Gemäß einer Ausführungsform, welche in den Patentansprüchen nicht beansprucht ist, umfasst die Verbundscheibe mindestens eine erste Scheibe, eine zweite Scheibe, einen dazwischen angeordneten Schichtstapel, mindestens umfassend die folgenden Schichten in der Reihenfolge von der ersten Scheibe zur zweiten Scheibe: eine erste thermoplastische Zwischenschicht, eine Trennschicht, eine Photopolymerschicht mit mindestens einem holographischen Element und eine zweite thermoplastische Zwischenschicht. Die Photopolymerschicht hat dabei eine Dicke von 75 µm bis 500 µm. Ein Vorteil dieser dicken Photopolymerschicht ist, dass sich die Diffusion von Weichmachern oder anderen Zusätzen aus den angrenzenden Schichten nicht spürbar auf die Qualität des holographischen Elements auswirkt. Die Trennschicht enthält Polyethylen (PE), Polymethylmethacrylat (PMMA), Polyvinylchlorid (PVC), Polyamid (PA), Polycarbonat (PC), Polyethylenterephthalat (PET) und / oder Cellulosetriacetat (TAC) und hat eine Dicke von 10 µm bis 300 µm. Die Trennschicht verhindert, dass Weichmacher oder andere Additive in die Photopolymerschicht diffundieren und verhindert so das Aufquellen der Photopolymerschicht. Somit ergibt sich nach der Lamination eine stabile Verbundscheibe ohne Beeinträchtigung des holographischen Elements, die besonders einfach herstellbar ist.

Bevorzugt grenzt die Photopolymerschicht direkt an die zweite thermoplastische Zwischenschicht an. Dies bedeutet, dass zwischen der Photopolymerschicht und der zweiten thermoplastischen Zwischenschicht keine weitere Schicht angeordnet ist, die als Diffusionsbarriere gegenüber Weichmachern oder anderen Additiven wirkt. Da die Photopolymerschicht gemäß dieser Ausführungsform vergleichsweise dick ist, wird keine Trägerschicht zur Verbesserung der mechanischen Stabilität benötigt. Der Aufbau des Schichtstapels wird somit vereinfacht.

Bevorzugt liegt die Dicke der Photopolymerschicht zwischen 100 µm und 400 µm, besonders bevorzugt zwischen 150 µm und 250 µm. Bei diesen Dicken ist die mechanische Stabilität der Photopolymerschicht so hoch, dass sie ohne Trägerschicht problemlos verarbeitet werden kann und gleichzeitig wirkt sich die Diffusion von Weichmachern oder anderen Additiven nicht negativ auf die optische Qualität des holographischen Elements aus.

Bevorzugt besteht die Trennschicht im Wesentlichen aus Polyethylen (PE), Polymethylmethacrylat (PMMA), Polyvinylchlorid (PVC), Polyamid (PA), Polycarbonat (PC), Polyethylenterephthalat (PET) oder Cellulosetriacetat (TAC). Besonders bevorzugt besteht die Trennschicht aus Polymethylmethacrylat (PMMA). Diese Trennschichten wirken als hervorragende Diffusionsbarriere für Weichmacher oder andere Additive aus der ersten thermoplastischen Zwischenschicht.

Bevorzugt hat die Trennschicht eine Dicke von 40 µm bis 200 µm, besonders bevorzugt von 65 µm bis 150 µm.

Bevorzugt besteht der zwischen erster Scheibe und zweiter Scheibe angeordnete Schichtenstapel aus den folgenden Schichten: eine erste thermoplastische Zwischenschicht, eine Trennschicht, eine Photopolymerschicht mit mindestens einem holographischen Element und eine zweite thermoplastische Zwischenschicht. Diese Schichten in Kombination liefern eine Verbundscheibe mit einem holographischen Element, das optisch von hoher Qualität ist. Aufgrund der nicht benötigten Trägerschicht ist die Anzahl an Schichten klein, sodass die Verbundscheibe besonders einfach herzustellen ist.

Die folgenden Ausführungen zur Verbundscheibe und deren Bestandteilen beziehen sich auf alle zuvor beschriebenen Ausführungsformen.

Die erste Scheibe und die zweite Scheibe weisen jeweils eine außenseitige Oberfläche, d.h. eine Außenfläche, und eine innenraumseitige Oberfläche, d.h. eine Innenfläche, auf und eine dazwischen verlaufende, umlaufende Seitenkante. Mit Außenfläche wird im Sinne der Erfindung diejenige Hauptfläche bezeichnet, welche dafür vorgesehen ist, in Einbaulage der äußeren Umgebung zugewandt zu sein. Mit Innenfläche wird im Sinne der Erfindung diejenige Hauptfläche bezeichnet, welche dafür vorgesehen ist, in Einbaulage dem Innenraum zugewandt zu sein. Die Innenfläche der ersten Scheibe und die Außenfläche der zweiten Scheibe sind in der erfindungsgemäßen Verbundscheibe einander zugewandt.

Ist die Verbundscheibe dafür vorgesehen, in einer Fensteröffnung eines Fahrzeugs oder eines Gebäudes einen Innenraum gegenüber der äußeren Umgebung abzutrennen, so wird mit Innenscheibe im Sinne der Erfindung die dem Innenraum (Fahrzeuginnenraum) zugewandte Scheibe bezeichnet. Mit Außenscheibe wird die der äußeren Umgebung zugewandte Scheibe bezeichnet. Die erste Scheibe kann die Außenscheibe oder die Innenscheibe sein und die zweite Scheibe kann die Außenscheibe oder die Innenscheibe sein. Bevorzugt ist die erste Scheibe die Außenscheibe und die zweite Scheibe die Innenscheibe.

Die Photopolymerschicht besteht aus einer Schicht Photopolymer und umfasst ein holographisches Element. Das holographische Element ist dort mittels Laserinterferenz aufgezeichnet oder durch einen Prägevorgang eingebracht worden. Geeignete Photopolymere sind dem Fachmann bekannt und zum Beispiel in EP1438634B1, in WO2011054797A1 und WO2018206503A1 beschrieben. Bevorzugt sind vernetzte Polyurethane.

Die erste thermoplastische Zwischenschicht und die zweite thermoplastische Zwischenschicht enthalten unabhängig voneinander zumindest Polyvinylbutyral (PVB), Ethylenvinylacetat (EVA), Polyurethan (PU) oder Copolymere oder Derivate davon oder bestehen daraus, bevorzugt Polyvinylbutyral (PVB), besonders bevorzugt Polyvinylbutyral (PVB) und dem Fachmann bekannte Additive wie beispielsweise Weichmacher.

Die erste thermoplastische Zwischenschicht und die zweite thermoplastische Zwischenschicht können unabhängig voneinander durch eine einzelne Folie ausgebildet sein oder auch durch mehr als eine Folie.

Die erste thermoplastische Zwischenschicht und/oder die zweite thermoplastische Zwischenschicht können unabhängig voneinander auch eine funktionale Zwischenschicht sein, insbesondere eine Zwischenschicht mit akustisch dämpfenden Eigenschaften, eine Infrarotstrahlung reflektierende Zwischenschicht, eine Infrarotstrahlung absorbierende Zwischenschicht, eine UV-Strahlung absorbierende Zwischenschicht, eine zumindest abschnittsweise gefärbte Zwischenschicht und/oder eine zumindest abschnittsweise getönte Zwischenschicht. So kann die erste thermoplastische Zwischenschicht oder die zweite thermoplastische Zwischenschicht beispielsweise auch eine Bandfilterfolie sein.

Die Dicken der ersten thermoplastischen Zwischenschicht und / oder der zweiten thermoplastischen Zwischenschicht liegen unabhängig voneinander zwischen 30 µm bis 1500 µm, bevorzugt zwischen 50 µm und 760 µm.

Die erste Scheibe und die zweite Scheibe sind bevorzugt aus Glas gefertigt, besonders bevorzugt aus Kalk-Natron-Glas, wie es für Fensterscheiben üblich ist. Die Scheiben können unabhängig voneinander aber auch aus anderen Glassorten gefertigt sein, beispielsweise Quarzglas, Borosilikatglas oder Alumino-Silikat-Glas, oder aus starren klaren Kunststoffen, beispielsweise Polycarbonat oder Polymethylmethacrylat. Die Scheiben können klar oder auch getönt oder gefärbt sein. Sofern die Verbundscheibe als Windschutzscheibe verwendet wird, sollte diese im zentralen Sichtbereich eine ausreichende Lichttransmission aufweisen, bevorzugt mindestens 70 % im Haupt-Durchsichtbereich A gemäß ECE-R43.

Die erste Scheibe, die zweite Scheibe, die erste thermoplastische Zwischenschicht und/oder die zweite Zwischenschicht können geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen. Bei Sonnenschutzbeschichtungen sind spektral möglichst neutrale Beschichtungen bevorzugt und/oder diese sind bevorzugt auf der ersten thermoplastischen Zwischenschicht oder auf der ersten Scheibe, insbesondere auf der Innenfläche der ersten Scheibe aufgebracht.

Die Dicke der ersten Scheibe und der zweiten Scheibe kann breit variieren und so den Erfordernissen im Einzelfall angepasst werden. Die erste Scheibe und die zweite Scheibe weisen bevorzugt Dicken von 0,5 mm bis 5 mm auf, besonders bevorzugt von 1 mm bis 3 mm, ganz besonders bevorzugt von 1,6 mm bis 2,1 mm. Beispielsweise weist eine Außenscheibe eine Dicke von 2,1 mm auf und eine Innenscheibe eine Dicke von 1,6 mm auf. Es kann sich bei der Außenscheibe oder insbesondere der Innenscheibe aber auch um Dünnglas mit einer Dicke von beispielsweise 0,55 mm handeln.

Die erfindungsgemäße Verbundscheibe kann eine oder mehrere zusätzliche Zwischenschichten, insbesondere funktionale Zwischenschichten, umfassen. Bei einer zusätzlichen Zwischenschicht kann es sich insbesondere um eine Zwischenschicht mit akustisch dämpfenden Eigenschaften, eine Infrarotstrahlung reflektierende Zwischenschicht, eine Infrarotstrahlung absorbierende Zwischenschicht, eine UV-Strahlung absorbierende Zwischenschicht, eine zumindest abschnittsweise gefärbte Zwischenschicht und/oder eine zumindest abschnittsweise getönte Zwischenschicht handeln. Beim Vorhandensein mehrerer zusätzlicher Zwischenschichten können diese auch unterschiedliche Funktionen aufweisen.

Die Erfindung umfasst auch eine Projektionsanordnung zur Darstellung von Informationen für einen Betrachter, mindestens umfassend eine erfindungsgemäße Verbundscheibe und einen Projektor, der von innen auf das holographische optische Element gerichtet ist. Die erfindungsgemäße Verbundscheibe kann dabei wie oben in den verschiedenen Ausführungsformen beschrieben ausgebildet sein.

Der Projektor sendet Licht mit Wellenlängen aus, auf die das holograhische optische Element anspricht.

Laserprojektoren sind bevorzugt, da sich mit diesen sehr diskrete Wellenlängen erzielen lassen.

Die Merkmale der zuvor beschriebenen Ausführungsformen der Verbundscheibe beziehen sich auch auf die Projektionsanordnung, die somit mit allen vier beschriebenen Ausführungsformen der Verbundscheibe offenbart ist.

Die Erfindung betrifft des Weiteren ein Verfahren zur Herstellung der erfindungsgemäßen Verbundscheibe, wobei:
a) eine erste Scheibe mit einer Außenfläche und einer Innenfläche, eine erste thermoplastische Zwischenschicht, eine zweite thermoplastische Zwischenschicht, eine Trennschicht und eine zweite Scheibe mit einer Außenfläche und einer Innenfläche bereitgestellt werden,
b) eine dünne Photopolymerschicht mit einem holographischen optischen Element bereitgestellt wird, wobei die dünne Photopolymerschicht mit einer Schichtdicke von 5 µm bis 50 µm auf einer Trägerschicht aufgebracht ist,
c) ein Schichtenstapel gebildet wird mit folgender Abfolge der Schichten und Scheiben: erste Scheibe - erste thermoplastische Zwischenschicht - Trennschicht - dünne Photopolymerschicht mit holographischem Element - Trägerschicht - zweite thermoplastische Zwischenschicht - zweite Scheibe,
d) der Schichtenstapel durch Lamination verbunden wird.

Alle Verbundscheiben gemäß der Erfindung können mit diesem Verfahren hergestellt werden. Die Ausführungen zu den bevorzugten Merkmalen der Verbundscheibe sind somit auch auf das Verfahren anwendbar. Hiermit wird auf die obigen Ausführungen verwiesen.

Ein Vorteil dieses Verfahrens ist, dass das holographische optische Element bereits in dem Schichtstapel vor der Lamination enthalten ist, sodass die Schritte c) und d) in Anwesenheit von Tageslicht durchgeführt werden können. Dies ist gegenüber dem Stand der Technik, bei dem die Lamination unter Ausschluss von Licht durchgeführt werden muss, ein besonderer Vorteil. Weiterhin wird dank der erfindungsgemäßen Kombination von Trägerschicht und Trennschicht eine Beeinträchtigung des holographischen Elements in der Photopolymerschicht durch Diffusion von Weichmachern in die Photopolymerschicht verhindert.

Offenbart wird daneben ein Verfahren zur Herstellung einer Verbundscheibe, welches in den Patentansprüchen nicht beansprucht ist, wobei:
a) eine erste Scheibe mit einer Außenfläche und einer Innenfläche, eine erste thermoplastische Zwischenschicht, eine zweite thermoplastische Zwischenschicht und eine zweite Scheibe mit einer Außenfläche und einer Innenfläche bereitgestellt werden,
b) eine dünne Photopolymerschicht mit einem holographischen optischen Element bereitgestellt wird, wobei die dünne Photopolymerschicht mit einer Schichtdicke von 5 µm bis 50 µm in einem Folienlaminat zwischen einer Trennschicht und einer Trägerschicht angeordnet ist,
c) ein Schichtenstapel gebildet wird mit folgender Abfolge der Schichten und Scheiben: erste Scheibe - erste thermoplastische Zwischenschicht - Trennschicht - dünne Photopolymerschicht mit holographischem Element - Trägerschicht - zweite thermoplastische Zwischenschicht - zweite Scheibe,
d) der Schichtenstapel durch Lamination verbunden wird.

Die Ausführungen zu den bevorzugten Merkmalen der Verbundscheibe sind somit auch auf das Verfahren anwendbar. Hiermit wird auf die obigen Ausführungen verwiesen.

Auch bei diesem Verfahren können die Schritte c) und d) in Anwesenheit von Tageslicht durchgeführt werden, was die Durchführung des Herstellungsverfahrens erheblich vereinfacht. Die Bereitstellung der dünnen Photopolymerschicht im Verbund mit der Trägerschicht und der Trennschicht trägt im Vergleich zum zuvor beschriebenen Verfahren weiter zur mechanischen Stabilität der Photopolymerschicht bei. Zudem wird die Bildung des Schichtstapels dank der geringeren Zahl an einzelnen Bestandteilen im Vergleich zur zuvor beschriebenen Ausführungsform weiter vereinfacht. Außerdem wird die Photopolymerschicht durch die direkt angebundene Trennschicht beidseitig geschützt während des Verarbeitungsprozesses.

Offenbart wird weiters ein Verfahren zur Herstellung einer Verbundscheibe , welches in den Patentansprüchen nicht beansprucht ist, wobei :
a) eine erste Scheibe mit einer Außenfläche und einer Innenfläche, eine erste thermoplastische Zwischenschicht, eine zweite thermoplastische Zwischenschicht, eine Trennschicht, eine dicke Photopolymerschicht mit einem holographischen optischen Element und eine zweite Scheibe mit einer Außenfläche und einer Innenfläche bereitgestellt werden, wobei die dicke Photopolymerschicht eine Dicke von 75 µm bis 500 µm hat,
b) ein Schichtenstapel gebildet wird mit folgender Abfolge der Schichten und Scheiben: erste Scheibe - erste thermoplastische Zwischenschicht - Trennschicht - dicke Photopolymerschicht mit holographischem Element - zweite thermoplastische Zwischenschicht - zweite Scheibe,
c) der Schichtenstapel durch Lamination verbunden wird.

Die Ausführungen zu den bevorzugten Merkmalen der Verbundscheibe sind somit auch auf das Verfahren anwendbar. Hiermit wird auf die obigen Ausführungen verwiesen.

Bei diesem Verfahren können die Schritte b) und c) in Anwesenheit von Tageslicht durchgeführt werden, was die Durchführung des Herstellungsverfahrens erheblich vereinfacht. Da die Photopolymerschicht im Vergleich zum zuvor beschriebenen Verfahren ohne Trägerschicht oder Trennschicht separat bereitgestellt wird, entfällt die Herstellung einer entsprechenden Folie, sodass der Herstellungsprozess vereinfacht wird. Alternativ bevorzugt kann die dicke Photopolymerschicht in Schritt a) auch im Verbund mit der Trennschicht bereitgestellt werden.

Die Erfindung umfasst außerdem die Verwendung der erfindungsgemäßen Verbundscheibe als Innenverglasung oder Außenverglasung in einem Fahrzeug oder einem Gebäude, insbesondere als Fahrzeugscheibe in Fortbewegungsmitteln für den Verkehr auf dem Land, in der Luft oder zu Wasser, insbesondere in Kraftfahrzeugen und insbesondere als Windschutzscheibe, die als eine Projektionsfläche dient.

Die Erfindung wird anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein. Es zeigen:
- Fig. 1: einen Querschnitt einer Ausgestaltung der erfindungsgemäßen Verbundscheibe 100,
- Fig. 2: einen Querschnitt einer Ausgestaltung einer Verbundscheibe 100, welche in den Patentansprüchen nicht beansprucht ist,
- Fig. 3: einen Querschnitt durch eine Ausgestaltung einer Projektionsanordnung 101,
- Fig. 4: eine Draufsicht auf eine Ausführungsform der erfindungsgemäßen Verbundscheibe 100,
- Fig. 5: ein Ausführungsbeispiel des erfindungsgemäßen Verfahrens anhand eines Flussdiagramms und
- Fig. 6: ein weiteres Ausführungsbeispiel des erfindungsgemäßen Verfahrens anhand eines Flussdiagramms.

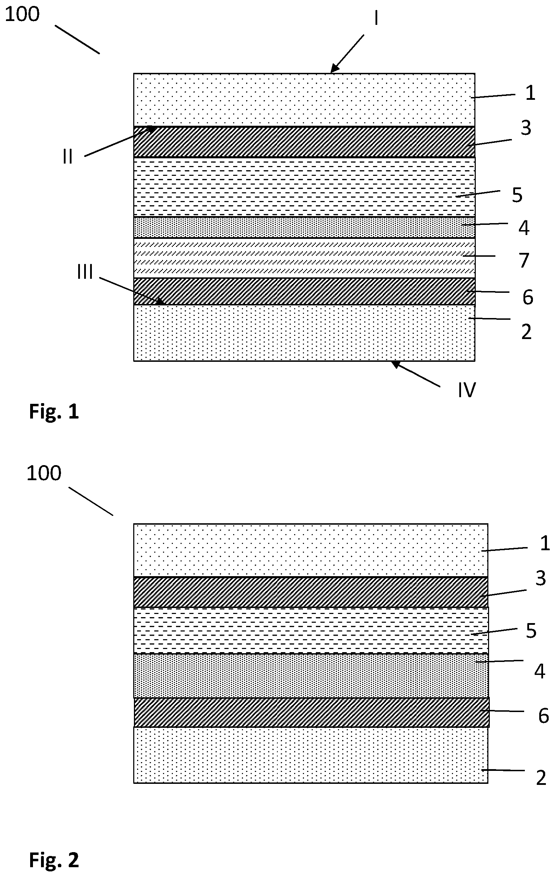

Fig. 1 zeigt einen Querschnitt einer Ausgestaltung der erfindungsgemäßen Verbundscheibe 100. In der in der Fig. 1 gezeigten Ausführungsform weist die Verbundscheibe 100 eine erste Scheibe als Außenscheibe 1 mit einer Innenfläche II und einer Außenfläche I, eine erste thermoplastische Zwischenschicht 3, eine Photopolymerschicht mit holographischem optischen Element 4, eine zweite thermoplastische Zwischenschicht 6 und eine zweite Scheibe als Innenscheibe 2 mit einer Innenfläche IV und einer Außenfläche III auf. Die Photopolymerschicht mit holographischem Element 4 ist zwischen der ersten Scheibe 1 und der zweiten Scheibe 2 angeordnet. Die erste thermoplastische Zwischenschicht 3 ist zwischen der ersten Scheibe 1 und der Photopolymerschicht 4 angeordnet.

Zwischen der ersten thermoplastischen Zwischenschicht 3 und der Photopolymerschicht 4 ist eine Trennschicht 5 angeordnet. Die Trennschicht 5 verhindert, dass Weichmacher oder andere zugesetzte Verbindungen aus der ersten thermoplastischen Zwischenschicht 3 in die Photopolymerschicht 4 diffundieren und dort zu einem Aufquellen der Photopolymerschicht 4 führen, was zu einer Beeinträchtigung des holographischen Elements führen würde.

Zwischen der zweiten thermoplastischen Zwischenschicht 6 und der Photopolymerschicht 4 ist eine Trägerschicht 7 angeordnet. Die Trägerschicht 7 dient als Träger für eine dünne Photopolymerschicht 4 und verhindert gleichzeitig, dass Weichmacher oder andere zugesetzte Verbindungen aus der zweiten thermoplastischen Zwischenschicht 6 in die Photopolymerschicht 4 diffundieren und dort zu einem Aufquellen der Photopolymerschicht 4 führen, was zu einer Beeinträchtigung des holographischen Elements in der Photopolymerschicht führen würde. Die Trägerschicht 7 grenzt direkt an die Photopolymerschicht 4 an, das heißt es gibt keine weitere Schicht zwischen Trägerschicht 7 und Photopolymerschicht 4.

Die Außenscheibe besteht beispielsweise aus Kalk-Natron-Glas und ist 2,1 mm dick. Die Innenscheibe 2 besteht beispielsweise aus Kalk-Natron-Glas und ist 1,6 mm dick.

Die erste thermoplastische Zwischenschicht 3 und die zweite thermoplastische Zwischenschicht 6 bestehen in den in der Fig. 1 gezeigten Ausführungsformen beispielsweise aus Polyvinylbutyral (PVB) und sind jeweils 0,38 mm dick.

Die Photopolymerschicht 4 ist eine dünne Photopolymerschicht 4 mit einer Dicke von 5 µm bis 50 µm, bevorzugt von 8 µm bis 30 µm, besonders bevorzugt von 10 µm bis 20 µm, beispielsweise 15 µm. Da die Photopolymerschicht 4 der teuerste Bestandteil des Schichtenstapels ist, ist es vorteilhaft, eine möglichst dünne Photopoylmerschicht zu verwenden und zur Erhöhung der mechanischen Stabilität die Photopolymerschicht in Kombination mit einer Trägerschicht 7 einzusetzen, die aus einem kostengünstigeren Material besteht.

Die Trägerschicht 7 ist eine polymere Schicht und enthält Polyethylenterephthalat (PET), Polyethylen (PE), Polymethylmethacrylat (PMMA), Polycarbonat (PC), Polyamid (PA), Polyvinylchlorid (PVC) und / oder Cellulosetriacetat (TAC) oder besteht daraus. Besonders bevorzugt enthält die Trägerschicht Polyamid (PA) oder besteht daraus. Die Trägerschicht 7 hat eine Dicke von 20 µm bis 100 µm, bevorzugt von 40 µm bis 90 µm, besonders bevorzugt von 65 µm bis 80 µm. Diese Materialien verleihen der dünnen Photopolymerschicht 4 die notwendige mechanische Stabilität für die Verarbeitung zu einer Verbundscheibe. Gleichzeitig wirken Sie als Diffusionsbarriere für Weichmacher und andere Zusätze aus der zweiten thermoplastischen Zwischenschicht 6.

Die Trennschicht 5 ist eine polymere Schicht und enthält Polyethylen (PE), Polyvinylchlorid (PVC) und / oder Polymethylmethacrylat (PMMA) oder besteht daraus. Besonders bevorzugt enthält die Trennschicht 5 Polymethylmethacrylat (PMMA) oder besteht daraus. PMMA hat sich als besonders geeignet erwiesen, da dies eine besonders hohe Transparenz aufweist. Die Trennschicht 5 hat eine Dicke von 10 µm bis 300 µm, bevorzugt von 40 µm bis 200 µm, besonders bevorzugt von 65 µm bis 150 µm. Diese Trennschichten wirken als hervorragende Diffusionsbarriere für Weichmacher und andere Additive aus der ersten thermoplastischen Zwischenschicht 3. In Verbindung mit den zuvor genannten Trägerschichten 7 ergibt sich nach der Lamination eine stabile Verbundscheibe 100 ohne Beeinträchtigung des holographischen Elements in der Photopolymerschicht 4.

Figur 1 zeigt weiterhin eine nicht anspruchsgemäße Ausführungsform einer Verbundscheibe 100, deren Schichtenbestandteile sich wie folgt von denen der zuvor beschriebenen Verbundscheibe 100 unterscheiden.

Gemäß dieser Ausführungsform ist die Photopolymerschicht 4 eine dünne Photopolymerschicht 4 mit einer Dicke von 5 µm bis 50 µm, bevorzugt von 8 µm bis 30 µm, besonders bevorzugt von 10 µm bis 20 µm, beispielsweise 15 µm. Da die Photopolymerschicht 4 der teuerste Bestandteil des Schichtenstapels ist, ist es vorteilhaft, eine möglichst dünne Photopoylmerschicht zu verwenden und zur Erhöhung der mechanischen Stabilität die Photopolymerschicht in Kombination mit einer Trägerschicht 7 einzusetzen, die aus einem kostengünstigeren Material besteht.

Die Trägerschicht 7 ist eine polymere Schicht und enthält Polyamid (PA), Polycarbonat (PC), Polyethylenterephthalat (PET) und /oder Cellulosetriacetat (TAC) oder besteht daraus. Besonders bevorzugt enthält die Trägerschicht 7 Polyethylenterephthalat (PET) oder besteht daraus. Die Trägerschicht 7 hat eine Dicke von 20 µm bis 100 µm, bevorzugt von 40 µm bis 90 µm, besonders bevorzugt von 65 µm bis 80 µm. Diese Materialien verleihen der dünnen Photopolymerschicht 4 die notwendige mechanische Stabilität für die Verarbeitung zu einer Verbundscheibe. Gleichzeitig wirken Sie als Diffusionsbarriere für Weichmacher und andere Zusätze aus der zweiten thermoplastischen Zwischenschicht 6.

Die Trennschicht 5 ist eine polymere Schicht und enthält Polyamid (PA), Polycarbonat (PC), Polyethylenterephthalat (PET) und / oder Cellulosetriacetat (TAC) oder besteht daraus. Besonders bevorzugt enthält die Trennschicht Polyethylenterephthalat (PET) oder besteht daraus. Die Trennschicht 5 hat eine Dicke von 200 µm bis 300 µm, bevorzugt von 220 µm bis 260 µm. Diese Trennschichten wirken als hervorragende Diffusionsbarriere für Weichmacher aus der ersten thermoplastischen Zwischenschicht 3, was aufgrund der großen Schichtdicke besonders effizient ist. In Verbindung mit den zuvor genannten Trägerschichten 7 ergibt sich nach der Lamination eine stabile Verbundscheibe 100 ohne Beeinträchtigung des holographischen Elements in der Photopolymerschicht 4. In einer alternativen bevorzugten Ausführungsform der zweiten Ausführungsform hat die Trennschicht 5 eine Dicke von 5 µm bis 20 µm. In dieser Dicke ist eine ausreichende Diffusionsbarriere hergestellt, sodass vorteilhaft Material gespart wird.

Figur 1 zeigt weiterhin einen Querschnitt einer nicht anspruchsgemäßen Ausführungsform einer Verbundscheibe 100, deren Schichtenbestandteile sich von denen der zuvor beschriebenen Verbundscheiben 100 wie folgt unterscheiden.

Gemäß dieser Ausführungsform ist die Photopolymerschicht 4 eine dünne Photopolymerschicht 4 mit einer Dicke von 5 µm bis 50 µm, bevorzugt von 8 µm bis 30 µm, besonders bevorzugt von 10 µm bis 20 µm, beispielsweise 15 µm. Da die Photopolymerschicht 4 der teuerste Bestandteil des Schichtenstapels ist, ist es vorteilhaft, eine möglichst dünne Photopolymerschicht zu verwenden und zur Erhöhung der mechanischen Stabilität die Photopolymerschicht in Kombination mit einer Trägerschicht 7 einzusetzen, die aus einem kostengünstigeren Material besteht.

Die Trägerschicht 7 ist eine polymere Schicht und enthält Polyethylen (PE), Polyvinylchlorid (PVC) und / oder Polymethylmethacrylat (PMMA) oder besteht daraus. Besonders bevorzugt enthält die Trägerschicht Polyethylen (PE) oder besteht daraus. Die Trägerschicht 7 hat eine Dicke von 20 µm bis 100 µm, bevorzugt von 40 µm bis 90 µm, besonders bevorzugt von 65 µm bis 80 µm. Diese Materialien verleihen der dünnen Photopolymerschicht 4 die notwendige mechanische Stabilität für die Verarbeitung zu einer Verbundscheibe. Zeitgleich wirken sie als Diffusionsbarriere für Weichmacher und andere Zusätze aus der zweiten thermoplastischen Zwischenschicht 6. Die Trägerschicht 7 und die Photopolymerschicht 4 stehen in direktem Kontakt miteinander, das heißt es befindet sich keine weitere Schicht zwischen Trägerschicht und Photopolymerschicht.

Die Trennschicht 5 ist eine polymere Schicht und enthält Polyethylenterephthalat (PET), Polyethylen (PE), Polymethylmethacrylat (PMMA), Polycarbonat (PC), Polyamid (PA), Polyvinylchlorid (PVC) und / oder Cellulosetriacetat (TAC) oder besteht daraus. Besonders bevorzugt enthält die Trennschicht 5 Polymethylmethacrylat (PMMA) oder besteht daraus. PMMA hat sich als besonders geeignet erwiesen, da dies eine besonders hohe Transparenz aufweist. Die Trennschicht 5 hat eine Dicke von 10 µm bis 300 µm, bevorzugt von 40 µm bis 200 µm, besonders bevorzugt von 65 µm bis 150 µm. Diese Trennschichten wirken als hervorragende Diffusionsbarriere für Weichmacher aus der ersten thermoplastischen Zwischenschicht 3. In Verbindung mit den zuvor genannten Trägerschichten 7 ergibt sich nach der Lamination eine stabile Verbundscheibe 100 ohne Beeinträchtigung des holographischen Elements in der Photopolymerschicht 4, wobei die optischen Eigenschaften besonders gut sind in Hinblick auf die Transparenz der Verbundscheibe und eine nur sehr niedrige zu beobachtende Welligkeit.

Figur 2 zeigt einen Querschnitt einer Ausgestaltung einer Verbundscheibe 100, welche in den Patentansprüchen nicht beansprucht ist. In dieser in Figur 2 gezeigten Ausführungsform weist die Verbundscheibe 100 eine erste Scheibe 1 mit einer Innenfläche II und einer Außenfläche I, eine erste thermoplastische Zwischenschicht 3, eine Photopolymerschicht mit holographischem Element 4 und eine zweite thermoplastische Zwischenschicht 6 sowie eine zweite Scheibe 2 auf. Die Photopolymerschicht mit holographischem Element 4 ist zwischen der ersten Scheibe 1 und der zweiten Scheibe 2 angeordnet. Die erste thermoplastische Zwischenschicht 3 ist zwischen der ersten Scheibe 1 und der Photopolymerschicht 4 angeordnet.

Zwischen der ersten thermoplastischen Zwischenschicht 3 und der Photopolymerschicht 4 ist eine Trennschicht 5 angeordnet. Die Trennschicht 5 verhindert, dass Weichmacher oder andere zugesetzte Verbindungen aus der ersten thermoplastischen Zwischenschicht 3 in die Photopolymerschicht 4 diffundieren und dort zu einem Aufquellen der Photopolymerschicht 4 führen, was zu einer Beeinträchtigung des holographischen Elements führen würde.

Die Außenscheibe besteht beispielsweise aus Kalk-Natron-Glas und ist 2,1 mm dick. Die Innenscheibe 2 besteht beispielsweise aus Kalk-Natron-Glas und ist 1,6 mm dick.

Die erste thermoplastische Zwischenschicht 3 und die zweite thermoplastische Zwischenschicht 5 bestehen beispielsweise aus Polyvinylbutyral (PVB) und sind jeweils 0,38 mm dick.

Gemäß dieser Ausführungsform ist die Photopolymerschicht 4 eine dicke Photopolymerschicht 4 mit einer Dicke von 75 µm bis 500 µm, bevorzugt von 100 µm bis 400 µm, besonders bevorzugt von 150 µm bis 250 µm, beispielsweise 200 µm. Ein Vorteil dieser dicken Photopolymerschicht 4 ist, dass keine weitere Trägerschicht benötigt wird, da die Photopolymerschicht 4 an sich bereits eine ausreichende mechanische Stabilität aufweist. Gleichzeitig wirkt sich eine mögliche Diffusion von zum Beispiel Weichmachern aus der zweiten thermoplastischen Zwischenschicht 6 nicht in demselben Maße auf die Qualität des holographischen Elements aus wie bei einer dünnen Photopolymerschicht, wie zum Beispiel in Figur 1 gezeigt. Die Photopolymerschicht 4 grenzt gemäß der Ausführungsform direkt an die zweite thermoplastische Zwischenschicht 6 an, sodass keine weitere Schicht zwischen der Photopolymerschicht 4 und der zweiten thermoplastischen Zwischenschicht 6 angeordnet ist.

Die Trennschicht 5 ist eine polymere Schicht und enthält Polyethylen (PE), Polymethylmethacrylat (PMMA), Polyvinylchlorid (PVC), Polyamid (PA), Polycarbonat (PC), Polyethylenterephthalat (PET) und / oder Cellulosetriacetat (TAC) oder besteht daraus. Besonders bevorzugt enthält die Trennschicht 5 Polymethylmethacrylat (PMMA) oder besteht daraus. PMMA hat sich als besonders geeignet erwiesen, da dies eine besonders hohe Transparenz aufweist. Die Trennschicht 5 hat eine Dicke von 10 µm bis 300 µm, bevorzugt von 40 µm bis 200 µm, besonders bevorzugt von 65 µm bis 150 µm. Diese Trennschichten wirken als hervorragende Diffusionsbarriere für Weichmacher aus der ersten thermoplastischen Zwischenschicht 3, was aufgrund der großen Schichtdicke besonders effizient ist. Mit diesen Trennschichten ergibt sich nach der Lamination eine stabile Verbundscheibe 100 ohne Beeinträchtigung des holographischen Elements in der Photopolymerschicht 4.

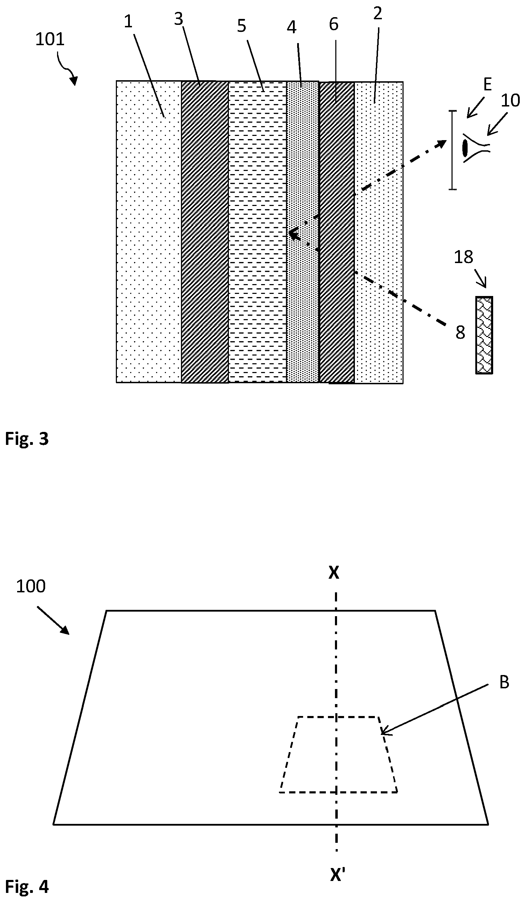

Fig. 3 zeigt einen Querschnitt durch eine Ausgestaltung einer Projektionsanordnung 101. Die Projektionsanordnung 101 umfasst eine Verbundscheibe 100 gemäß der in der Fig. 2 gezeigten Ausführungsform und einen Projektor 18. Der Projektor 18 ist innen angeordnet. Der Strahlengang für von einem Projektor ausgehendes Licht ist in der Zeichnung mit dem Bezugszeichen 8 versehen. Das von dem Projektor 18 ausgehende Licht trifft auf das holographische Element in der Photopolymerschicht 4 und aktiviert das Hologramm. Das vom Projektor 18 abgestrahlte Licht wird von dem holographischen optischen Element in der Photopolymerschicht 4 reflektiert, so dass die Hologramme von einem Betrachter 10 als virtuelle oder reale Bilder auf der von ihm abgewandten Seite der Verbundscheibe 100 wahrgenommen werden, wenn sich seine Augen innerhalb der sogenannten Eyebox E befinden.

Fig. 4 zeigt eine Draufsicht auf eine Ausführungsform einer erfindungsgemäßen Verbundscheibe 100. Der Bereich in dem das mindestens eine holographische Element angeordnet ist, ist in der Fig. 4 mit dem Bezugszeichen B gekennzeichnet. Die Fig. 1 bis 3 zeigen Querschnitte entlang der Schnittlinie X-X' von verschiedenen Ausführungsformen. Bei dem Bereich B handelt es sich beispielsweise um den HUD-Bereich einer als Windschutzscheibe ausgebildeten erfindungsgemäßen Verbundscheibe 100.

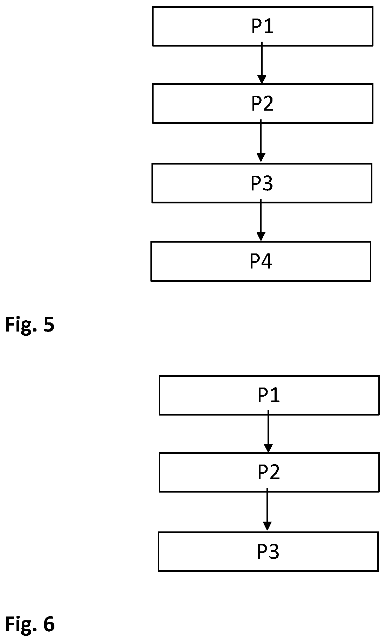

Fig. 5 zeigt ein Ausführungsbeispiel des erfindungsgemäßen Verfahrens zur Herstellung einer erfindungsgemäßen Verbundscheibe 100 gemäß Figur 1 anhand eines Flussdiagramms umfassend die Schritte:

| | |
|---|---|
| P1 | Bereitstellung einer ersten Scheibe 1, einer ersten thermoplastischen Zwischenschicht 3, einer zweiten thermoplastischen Zwischenschicht 6, einer Trennschicht 5, einer zweiten Scheibe 2. |
| P2 | Bereitstellung einer dünnen Photopolymerschicht mit einem holographischen optischen Element 4, die auf einer Trägerschicht 7 aufgebracht ist. |
| P3 | Bildung eines Schichtenstapels mit folgender Abfolge der Schichten und Scheiben: erste Scheibe - erste thermoplastische Zwischenschicht - Trennschicht - Photopolymerschicht mit holographischem Element - Trägerschicht - zweite thermoplastische Zwischenschicht - zweite Scheibe. |
| P4 | Verbinden des Schichtenstapels durch Lamination. |

Die Lamination erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Alle zu Figur 1 beschriebenen Ausführungsformen können nach dem beschriebenen Verfahren hergestellt werden. Die Bereitstellung der dünnen Photopolymerschicht im Verbund mit der Trägerfolie trägt zur mechanischen Stabilität der Photopolymerschicht bei und verbessert so das Laminationsergebnis, da die Bildung des Schichtstapels dank der mechanisch stabilen Einzelschichten erheblich vereinfacht wird.

In einer alternativen Ausführungsform des Verfahrens zur Herstellung einer Verbundscheibe 100 gemäß Figur 1, welches in den Patentansprüchen nicht beansprucht ist, sind die Schritte P1 bis P4 wie folgt ausgestaltet:

| | |
|---|---|
| P1 | Bereitstellung einer ersten Scheibe 1, einer ersten thermoplastischen Zwischenschicht 3, einer zweiten thermoplastischen Zwischenschicht 6, einer zweiten Scheibe 2. |
| P2 | Bereitstellung einer dünnen Photopolymerschicht mit einem holographischen optischen Element 4, die in einem Folienlaminat zwischen einer Trennschicht 5 und einer Trägerschicht 7 angeordnet ist. |
| P3 | Bildung eines Schichtenstapels mit folgender Abfolge der Schichten und Scheiben: erste Scheibe - erste thermoplastische Zwischenschicht - Trennschicht - Photopolymerschicht mit holographischem Element - Trägerschicht - zweite thermoplastische Zwischenschicht - zweite Scheibe. |
| P4 | Verbinden des Schichtenstapels durch Lamination. |

Die Lamination erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Die Bereitstellung der dünnen Photopolymerschicht im Verbund mit der Trägerschicht und der Trennschicht trägt weiter zur mechanischen Stabilität der Photopolymerschicht bei. Zudem wird die Bildung des Schichtstapels dank der geringeren Zahl an einzelnen Schichten im Vergleich zur zuvor beschriebenen Ausführungsform weiter vereinfacht. Außerdem wird die Photopolymerschicht durch die direkt angebundene Trennschicht beidseitig geschützt.

Fig. 6 zeigt ein Ausführungsbeispiel eines Verfahrens zur Herstellung einer Verbundscheibe 100, wie in Figur 2 gezeigt, welches in den Patentansprüchen nicht beansprucht ist, anhand eines Flussdiagramms umfassend die Schritte:

| | |
|---|---|
| P1 | Bereitstellung einer ersten Scheibe 1, einer ersten thermoplastischen Zwischenschicht 3, einer zweiten thermoplastischen Zwischenschicht 6, einer Trennschicht 5, einer dicken Photopolymerschicht mit einem holographischen optischen Element 4, einer zweiten Scheibe 2. |
| P2 | Bildung eines Schichtenstapels mit folgender Abfolge der Schichten und Scheiben: erste Scheibe - erste thermoplastische Zwischenschicht - Trennschicht - Photopolymerschicht mit holographischem Element - zweite thermoplastische Zwischenschicht - zweite Scheibe. |
| P3 | Verbinden des Schichtenstapels durch Lamination. |

Die Lamination erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Da die Photopolymerschicht 4 ohne Trägerschicht oder Trennschicht separat bereitgestellt wird, entfällt die Herstellung einer entsprechenden Folie, sodass der Herstellungsprozess vereinfacht wird.

### Bezugszeichenliste:

- 1: erste Scheibe
- 2: zweite Scheibe
- 3: erste thermoplastische Zwischenschicht
- 4: Photopolymerschicht mit holographischem Element, Photopolymerschicht mit holographischem optischen Element
- 5: Trennschicht
- 6: zweite thermoplastische Zwischenschicht
- 7: Trägerschicht
- 8: Strahlengang für von einem Projektor ausgehendes Licht
- 10: Fahrzeugführer/Betrachter
- 18: Projektor
- 100: Verbundscheibe
- 101: Projektionsanordnung
- I: Außenfläche der ersten Scheibe 1
- II: Innenfläche der ersten Scheibe 1
- III: Außenfläche der zweiten Scheibe 2
- IV: Innenfläche der zweiten Scheibe 2
- B: Bereich von Hologrammen
- E: Eyebox
- X-X': Schnittlinie

## Patentansprüche

1. Verbundscheibe (100), mindestens umfassend eine erste Scheibe (1), eine zweite Scheibe (2), einen dazwischen angeordneten Schichtstapel, bestehend aus den folgenden Schichten in der Reihenfolge von der ersten Scheibe (1) zur zweiten Scheibe (2): eine erste thermoplastische Zwischenschicht (3), eine Trennschicht (5), eine Photopolymerschicht (4) mit mindestens einem holographischen Element, eine Trägerschicht (7) und eine zweite thermoplastische Zwischenschicht (6), wobei
- die Photopolymerschicht (4) eine Dicke von 5 µm bis 50 µm hat,
- die Trägerschicht (7) Polyethylenterephthalat (PET), Polyethylen (PE), Polymethylmethacrylat (PMMA), Polycarbonat (PC), Polyamid (PA), Polyvinylchlorid (PVC) und / oder Cellulosetriacetat (TAC) enthält und eine Dicke von 20 µm bis 100 µm hat, wobei die Trägerschicht (7) direkt angrenzend an die Photopolymerschicht (4) angeordnet ist,
- die Trennschicht (5) Polyethylen (PE), Polyvinylchlorid (PVC) und / oder Polymethylmethacrylat (PMMA) enthält und eine Dicke von 10 µm bis 300 µm hat.

2. Verbundscheibe (100) nach Anspruch 1, wobei die Dicke der Photopolymerschicht (4) zwischen 8 µm und 30 µm, bevorzugt zwischen 10 µm und 20 µm liegt.

3. Verbundscheibe (100) nach einem der Ansprüche 1 oder 2, wobei die Trägerschicht (7) im Wesentlichen aus Polyethylenterephthalat (PET), Polyethylen (PE), Polymethylmethacrylat (PMMA), Polycarbonat (PC), Polyamid (PA), Polyvinylchlorid (PVC) oder Cellulosetriacetat (TAC) besteht, bevorzugt aus Polyamid (PA) besteht.

4. Verbundscheibe (100) nach einem der Ansprüche 1 bis 3, wobei die Trägerschicht (7) eine Dicke von 40 µm bis 90 µm, bevorzugt von 65 µm bis 80 µm hat.

5. Verbundscheibe (100) nach einem der Ansprüche 1 bis 4, wobei die Trennschicht (7) im Wesentlichen aus Polyethylen (PE), Polyvinylchlorid (PVC) oder Polymethylmethacrylat (PMMA) besteht, bevorzugt aus Polymethylmethacrylat (PMMA) besteht.

6. Verbundscheibe (100) nach einem der Ansprüche 1 bis 5, wobei die Trennschicht (7) eine Dicke von 40 µm bis 200 µm, bevorzugt von 65 µm bis 150 µm hat.

7. Verbundscheibe (100) nach einem der Ansprüche 1 bis 6, wobei die erste thermoplastische Zwischenschicht (3) und / oder die zweite thermoplastische Zwischenschicht (6) Polyvinylbutyral (PVB), Ethylenvinylacetat (EVA), Polyurethan (PU) oder Copolymere davon enthalten oder bevorzugt im Wesentlichen daraus bestehen.

8. Verbundscheibe (100) nach einem der Ansprüche 1 bis 7, wobei die erste Scheibe (1) und/oder die zweite Scheibe (2) aus Glas, bevorzugt aus Kalk-Natron-Glas bestehen.

9. Projektionsanordnung (101) mindestens umfassend eine erfindungsgemäße Verbundscheibe (100) nach einem der Ansprüche 1 bis 8 und einen Projektor (18), der auf das holographische optische Element gerichtet ist, wobei der Projektor (18) bevorzugt ein Laserprojektor ist.

10. Verfahren zur Herstellung einer Verbundscheibe (100) nach einem der Ansprüche 1 bis 8, wobei
a) eine erste Scheibe (1), eine erste thermoplastische Zwischenschicht (3), eine zweite thermoplastische Zwischenschicht (6), eine Trennschicht (5) und eine zweite Scheibe (2) bereitgestellt werden,
b) eine Photopolymerschicht (4) mit einem holographischen optischen Element bereitgestellt wird, wobei die Photopolymerschicht (4) auf einer Trägerschicht (7) aufgebracht ist,
c) ein Schichtenstapel gebildet wird mit folgender Abfolge der Schichten und Scheiben: erste Scheibe (1) - erste thermoplastische Zwischenschicht (3) - Trennschicht (5) - eine Photopolymerschicht (4) mit holographischem Element - Trägerschicht (7) - zweite thermoplastische Zwischenschicht (6) - zweite Scheibe (2),
d) der Schichtenstapel durch Lamination verbunden wird.

11. Verwendung einer Verbundscheibe (100) nach einem der Ansprüche 1 bis 8 als Innenverglasung oder Außenverglasung in einem Fahrzeug oder einem Gebäude, insbesondere als Fahrzeugscheibe in Fortbewegungsmitteln für den Verkehr auf dem Land, in der Luft oder zu Wasser, insbesondere in Kraftfahrzeugen und insbesondere als Windschutzscheibe, die als eine Projektionsfläche dient.

## Claims

1. Laminated pane (100), at least comprising a first pane (1), a second pane (2), a layer stack arranged therebetween, consisting of the following layers in order from the first pane (1) to the second pane (2): a first thermoplastic intermediate layer (3), a separating layer (5), a photopolymer layer (4) with at least one holographic element, a carrier layer (7), and a second thermoplastic intermediate layer (6), wherein
- the photopolymer layer (4) has a thickness of 5 µm to 50 µm,
- the carrier layer (7) contains polyethylene terephthalate (PET), polyethylene (PE), polymethyl methacrylate (PMMA), polycarbonate (PC), polyamide (PA), polyvinyl chloride (PVC), and / or cellulose triacetate (TAC) and has a thickness of 20 µm to 100 µm, wherein the carrier layer (7) is arranged directly adjacent the photopolymer layer (4),
- the separating layer (5) contains polyethylene (PE), polyvinyl chloride (PVC), and / or polymethyl methacrylate (PMMA) and has a thickness of 10 µm to 300 µm.

2. Laminated pane (100) according to claim 1, wherein the thickness of the photopolymer layer (4) is between 8 µm and 30 µm, preferably between 10 µm and 20 µm.

3. Laminated pane (100) according to one of claims 1 or 2, wherein the carrier layer (7) consists essentially of polyethylene terephthalate (PET), polyethylene (PE), polymethyl methacrylate (PMMA), polycarbonate (PC), polyamide (PA), polyvinyl chloride (PVC), or cellulose triacetate (TAC), preferably consists of polyamide (PA).

4. Laminated pane (100) according to one of claims 1 through 3, wherein the carrier layer (7) has a thickness of 40 µm to 90 µm, preferably of 65 µm to 80 µm.

5. Laminated pane (100) according to one of claims 1 through 4, wherein the separating layer (7) consists essentially of polyethylene (PE), polyvinyl chloride (PVC), or polymethyl methacrylate (PMMA), preferably consists of polymethyl methacrylate (PMMA).

6. Laminated pane (100) according to one of claims 1 through 5, wherein the separating layer (7) has a thickness of 40 µm to 200 µm, preferably of 65 µm to 150 µm.

7. Laminated pane (100) according to one of claims 1 through 6, wherein the first thermoplastic intermediate layer (3) and / or the second thermoplastic intermediate layer (6) contain or preferably consist essentially of polyvinyl butyral (PVB), ethylene vinyl acetate (EVA), polyurethane (PU), or copolymers thereof.

8. Laminated pane (100) according to one of claims 1 through 7, wherein the first pane (1) and/or the second pane (2) are made of glass, preferably of soda lime glass.

9. Projection assembly (101) at least comprising a laminated pane (100) according to the invention according to one of claims 1 to 8 and a projector (18) that is aimed at the holographic optical element, wherein the projector (18) is preferably a laser projector.

10. Method for producing a laminated pane (100) according to one of claims 1 through 8, wherein
a) a first pane (1), a first thermoplastic intermediate layer (3), a second thermoplastic intermediate layer (6), a separating layer (5), and a second pane (2) are provided,
b) a photopolymer layer (4) having a holographic optical element is provided, wherein the photopolymer layer (4) is applied on a carrier layer (7),
c) a layer stack is formed with the following sequence of layers and panes: first pane (1) - first thermoplastic intermediate layer (3) - separating layer (5) - a photopolymer layer (4) having a holographic element - carrier layer (7) - second thermoplastic intermediate layer (6) - second pane (2),
d) the layer stack is joined by lamination.

11. Use of a laminated pane (100) according to one of claims 1 through 8 as interior glazing or exterior glazing in a vehicle or a building, in particular as a vehicle pane in means of locomotion for travel on land, in the air, or on water, in particular in motor vehicles and in particular as a windshield that serves as a projection surface.

## Revendications

1. Vitrage feuilleté (100) comprenant au moins une première vitre (1), une deuxième vitre (2) et un empilement de couches disposé entre celles-ci, constitué des couches suivantes dans l'ordre, depuis la première vitre (1) vers la deuxième vitre (2): une première couche intermédiaire thermoplastique (3), une couche de séparation (5), une couche de photopolymère (4) avec au moins un élément holographique, une couche de support (7) et une deuxième couche intermédiaire thermoplastique (6), dans laquelle
- la couche de photopolymère (4) a une épaisseur de 5 µm à 50 µm,
- la couche de support (7) contient du polyéthylène téréphtalate (PET), du polyéthylène (PE), du polyméthacrylate de méthyle (PMMA), du polycarbonate (PC), du polyamide (PA), du chlorure de polyvinyle (PVC) et/ou du triacétate de cellulose (TAC) et présente une épaisseur comprise entre 20 µm et 100 µm, la couche de support (7) étant disposée directement à côté de la couche de photopolymère (4),
- la couche de séparation (5) contient du polyéthylène (PE), du chlorure de polyvinyle (PVC) et/ou du polyméthacrylate de méthyle (PMMA) et a une épaisseur comprise entre 10 µm et 300 µm.

2. Vitrage feuilleté (100) selon la revendication 1, dans lequel l'épaisseur de la couche de photopolymère (4) est comprise entre 8 µm et 30 µm, de préférence entre 10 µm et 20 µm.

3. Vitrage feuilleté (100) selon l'une des revendications 1 ou 2, dans lequel la couche de support (7) est essentiellement constituée de polyéthylène téréphtalate (PET), de polyéthylène (PE), de polyméthacrylate de méthyle (PMMA), de polycarbonate (PC), de polyamide (PA), de polychlorure de vinyle (PVC) ou de triacétate de cellulose (TAC), de préférence en polyamide (PA).

4. Vitrage feuilleté (100) selon l'une des revendications 1 à 3, dans lequel la couche de support (7) a une épaisseur comprise entre 40 µm et 90 µm, de préférence entre 65 µm et 80 µm.

5. Vitrage feuilleté (100) selon l'une des revendications 1 à 4, dans lequel la couche de séparation (7) est essentiellement constituée de polyéthylène (PE), de polychlorure de vinyle (PVC) ou de polyméthacrylate de méthyle (PMMA), de préférence de polyméthacrylate de méthyle (PMMA).

6. Vitrage feuilleté (100) selon l'une des revendications 1 à 5, dans lequel la couche de séparation (7) a une épaisseur comprise entre 40 µm et 200 µm, de préférence entre 65 µm et 150 µm.

7. Vitrage feuilleté (100) selon l'une des revendications 1 à 6, dans lequel la première couche intermédiaire thermoplastique (3) et/ou la deuxième couche intermédiaire thermoplastique (6) contiennent ou sont de préférence essentiellement constituées de polyvinylbutyral (PVB), d'éthylène-acétate de vinyle (EVA), de polyuréthane (PU) ou de copolymères de ceux-ci.

8. Vitrage feuilleté (100) selon l'une des revendications 1 à 7, dans lequel le premier vitrage (1) et/ou le deuxième vitrage (2) sont en verre, de préférence en verre sodocalcique.

9. Ensemble de projection (101) comprenant au moins un vitrage feuilleté (100) selon l'invention selon l'une des revendications 1 à 8 et un projecteur (18) qui est dirigé vers l'élément optique holographique, dans lequel le projecteur (18) est de préférence un projecteur laser.

10. Procédé de fabrication d'un vitrage feuilleté (100) selon l'une des revendications 1 à 8, dans lequel
a) une première vitre (1), une première couche intermédiaire thermoplastique (3), une deuxième couche intermédiaire thermoplastique (6), une couche de séparation (5) et une deuxième vitre (2) sont prévues,
b) une couche de photopolymère (4) comportant un élément optique holographique est prévue, dans lequel la couche de photopolymère (4) est appliquée sur une couche de support (7),
c) un empilement de couches est formé avec la séquence suivante de couches et de vitres: première vitre (1) - première couche intermédiaire thermoplastique (3) - couche de séparation (5) - une couche de photopolymère (4) comportant un élément holographique - couche de support (7) - deuxième couche intermédiaire thermoplastique (6) - deuxième vitre (2),
d) l'empilement de couches est assemblé par laminage.

11. Utilisation d'un vitrage feuilleté (100) selon l'une des revendications 1 à 8 comme vitrage intérieur ou vitrage extérieur dans un véhicule ou un bâtiment, en particulier comme vitre de véhicule dans des moyens de locomotion pour se déplacer sur terre, dans les airs ou sur l'eau, en particulier dans des véhicules à moteur et en particulier comme pare-brise servant de surface de projection.
